# FASCICULE DE BREVET EUROPEEN

(11) **EP 4 005 743 B1**
(45) Date de publication et mention de la délivrance du brevet: **12.04.2023**
(21) Numéro de dépôt: 21210715.5
(22) Date de dépôt: 26.11.2021
(51) Int. Cl.: B25J 9/02, F16M 11/42

(54) **ROBOT CARTESIEN COMPRENANT AU MOINS UN MAILLON, ET MAILLON CORRESPONDANT**
KARTESISCHER ROBOTER MIT MINDESTENS EINEM KETTENGLIED UND ENTSPRECHENDES KETTENGLIED
CARTESIAN ROBOT COMPRISING AT LEAST ONE LINK, AND CORRESPONDING LINK

(30) Priorité: 26.11.2020 FR 2012227
(43) Date de publication de la demande: 01.06.2022
(73) Titulaire: Sepro Robotique, 85003 La Roche-sur-Yon Cedex (FR)
(72) Inventeur: MARSAL, Damien, 85310 Nesmy (FR); BOURGET, Antoine, 85170 Le Poiré sur Vie (FR); BONNEFOND, Benjamin, 85190 Beaulieu sous la Roche (FR)
(74) Mandataire: Vidon Brevets & Stratégie

(56) Documents cités:
- EP-B1- 0 295 215
- WO-A1-2014/064684

## Description

### Domaine technique

Le domaine de l'invention est celui des robots multiaxes, et plus particulièrement des robots cartésiens, par exemple du type à 5 ou 6 axes, adaptés notamment à l'industrie de la plasturgie, et en particulier à la manipulation de produits délivrés par des presses à injection plastique. Plus particulièrement, l'invention concerne la réalisation de bras de tels robots.

### Art antérieur

Dans le domaine des presses à injection, il est connu d'utiliser des robots capables d'effectuer plusieurs mouvements axiaux et portant un ou plusieurs éléments de préhension munis de ventouses pour saisir et déplacer les objets, ou pièces, moulés par des presses.

Ces robots multiaxes comprennent une pluralité de maillons dont certains assurent un déplacement selon un axe ou plusieurs axes donnés. Certains des maillons assurent donc le guidage et le maintien d'un autre maillon ou de l'élément de préhension du robot multiaxes. Un tel robot est par exemple décrit dans le document EP0295215.

Généralement, un maillon est réalisé sous la forme d'un profilé extrudé en aluminium. Ceci est intéressant, en ce qui concerne notamment la répétabilité, l'intégration de fonctions techniques complexes, ou la modularité par exemple.

Cependant, l'aluminium est un matériau relativement souple et peu résistant, comparé à l'acier. Pour obtenir une rigidité acceptable, il est donc nécessaire d'utiliser une quantité importante de matière, conduisant à des coûts élevés. En outre, du fait des frottements sur les zones de roulement des éléments de guidage, la longévité et la fiabilité des maillons en aluminium se retrouvent fortement réduites.

De sorte à pallier ces problèmes, il pourrait être envisagé de réaliser ces maillons en acier. Cependant, la production d'un profilé intégrant des fonctions complexes en acier est peu aisée, voire impossible, et les profilés en acier se limitent généralement à des formes simples, par exemple rectangulaires ou carrées.

Il existe donc un besoin de mettre en oeuvre des robots cartésiens multiaxes comprenant des maillons plus fiables et pérennes que les maillons en aluminium, et moins coûteux que ces derniers.

La combinaison des deux matières pour former un tel maillon est directement écartée par l'homme du métier, du fait de l'effet bilame : cette approche introduirait un fléchissement important et non acceptable du maillon, notamment si celui-ci est de grande longueur, sous un gradient de température : l'aluminium se dilatant plus que l'acier, cela provoquerait un inévitable effet bilame.

Dans d'autres domaines, l'homme du métier a pu envisager de réaliser des ensembles bi-matière, combinant une partie en aluminium et une partie en acier, par exemple dans le domaine des rails de guidage. C'est par exemple le cas du document WO2014064684 qui décrit un système de rail pour guider un chariot, comprenant notamment un corps de rail construit en aluminium présentant des rainures longitudinales le long de ses côtés, recevant des bandes longitudinales de roulement en acier permettant un guidage du rail. Ces bandes longitudinales de roulement sont montées mobiles en translation, avec un degré de liberté de sorte à supprimer les contraintes exercées par le corps en aluminium sur les bandes de roulement. En cas d'augmentation de température, les bandes de roulement peuvent ainsi glisser par rapport au corps du rail de guidage sans dilatation ou déformation thermique.

Bien évidemment, un tel ensemble bi-matière ne peut pas être adapté à un maillon bi-matière de robot cartésien. En effet, un tel maillon n'a pas pour objectif de guider mais de supporter. En d'autres termes, il n'a pas pour objectif d'éviter les contraintes comme peut l'avoir un rail mais a pour objectif d'accepter et supporter les contraintes, ce qui est incompatible avec le degré de liberté prévu, permettant aux bandes de roulement de se déplacer le long du corps du rail. En effet, le fait de prévoir un tel un degré de liberté dans l'ensemble composant ce maillon supprimerait tout effet de support du fait du manque de contraintes exercées par une partie sur une autre, ce qui n'est pas envisageable.

### Exposé de l'invention

Les inventeurs ont cependant passé outre ces *a priori*, et ont recherché une solution permettant de mettre en oeuvre des maillons bi-matière dans des robots cartésiens, assurant une telle fonction de support tout en annulant ou à tout le moins minimisant l'effet bilame, de façon à obtenir un gain économique sans compromis technique. Cette approche n'est en elle-même pas évidente, et s'oppose aux *a priori* de l'homme du métier pour cette application particulière aux robots cartésiens.

Dans ce but, l'invention concerne un robot cartésien mulitaxes comprenant au moins un maillon. Selon l'invention, le au moins un maillon est constitué d'au moins deux éléments réalisés dans deux matériaux différents et solidarisés l'un à l'autre :
- un élément de rigidification, réalisé à partir d'une tôle d'acier pliée ; et
- un élément de maintien et/ou de guidage, réalisé à partir d'un profilé en aluminium extrudé, l'élément de rigidification et l'élément de maintien et/ou de guidage solidarisés l'un à l'autre en liaison encastrement à température constante,

En outre, le maillon comprend également un élément de suppression ou de réduction d'une déformation dudit maillon en cas de variation de la température, réalisé dans un premier desdits matériaux et s'étendant parallèlement auxdits éléments de rigidification et de maintien et/ou de guidage, et est fixé à l'élément parmi ceux-ci réalisé dans le second desdits matériaux, de façon que ce dernier, ou au moins une surface de ce dernier, soit placé entre deux éléments réalisés dans le premier matériau, une ou plusieurs portions de l'un desdits éléments subissant une dilatation ou une contraction par rapport à au moins l'un des autres éléments en contact lorsque la température varie.

Ainsi, l'invention propose une approche nouvelle et inventive permettant de résoudre au moins en partie certains des inconvénients de l'art antérieur.

Plus particulièrement, avec la mise en oeuvre d'au moins un maillon bi-matière mettant en oeuvre un élément de suppression ou de réduction d'une déformation, on s'affranchit des éventuels problèmes de fléchissement qui pourraient intervenir en cas de gradient important de température ou de longueur importante de ce maillon. Ceci est notamment mis en oeuvre sur les maillons de grande longueur.

En outre, avec la mise en oeuvre d'un tel maillon bi-matière, c'est-à-dire comprenant un élément de rigidification en acier, par exemple plié, combiné à un élément de maintien et/ou de guidage en aluminium, on s'affranchit des problèmes de rigidité de l'aluminium seul, résolus par la mise en oeuvre de l'élément de rigidification, et on s'affranchit également des difficultés de travail de l'acier pour obtenir un profilé convenable, les fonctions correspondantes étant assurées par un élément de maintien et/ou de guidage en aluminium.

Il est à noter que les trois éléments sont solidarisés entre eux en liaison encastrement à température constante, de sorte qu'aucun glissement absolu de l'une des parties par rapport à une des autres ne se produise à l'usage, les glissements de matières étant très majoritairement voire intégralement la conséquence de la dilatation de la matière de l'une des parties par rapport à l'une des autres en fonction de la chaleur lors du fonctionnement du robot cartésien.

Par solidarisés en liaison encastrement à température constante, on entend ici que les trois éléments sont liés l'un à l'autre sans possibilité de mouvement relatif à température constante.

En d'autres termes, l'élément de rigidification, l'élément de maintien et/ou de guidage, et l'élément de suppression ou de réduction d'une déformation ne présentent aucun degré de liberté l'un par rapport à l'autre, et sont donc fixes l'un par rapport à l'autre à température constante.

En d'autres termes, l'élément de rigidification en sa totalité ne glisse pas, c'est-à-dire ne se déplace pas, par rapport à l'élément de maintien et/ou de guidage, et inversement. Seule une ou plusieurs portions de l'un desdits éléments subit une dilatation ou une contraction, et donc un glissement relatif par rapport à au moins un autre desdits éléments.

De même, l'élément de suppression ou de réduction d'une déformation en sa totalité ne glisse pas, c'est-à-dire ne se déplace pas, par rapport à l'élément de maintien et/ou de guidage ou par rapport à l'élément de rigidification, et inversement. Seule une ou plusieurs portions de l'un desdits éléments subit une dilatation ou une contraction, et donc un glissement relatif par rapport à au moins un autre desdits éléments.

En revanche, un glissement relatif de l'un des éléments par rapport à au moins un des autres est rendu possible par dilatation ou contraction, lorsque la température varie (effet bilame).

Selon un premier mode de réalisation de l'invention, ledit élément de maintien et/ou de guidage en aluminium définit un logement intérieur, dans lequel est inséré ledit élément de suppression ou de réduction d'une déformation, réalisé en acier.

Ceci permet de réduire simplement et efficacement les effets de dilatation de l'élément de maintien et/ou de guidage réalisé à partir d'un profilé en aluminium extrudé, à l'aide d'une forme simple en acier, et sans augmenter le volume global du maillon.

Dans ce cas, ledit élément de maintien et/ou de guidage peut présenter, dans un mode de réalisation, une portion plane présentant deux faces, une face inférieure en contact avec ledit élément de rigidification et une face supérieure en contact avec ledit élément de suppression ou de réduction d'une déformation.

Selon différentes variantes, un tel élément de suppression ou de réduction d'une déformation présente une section de forme appartenant au groupe comprenant :
- une forme rectangulaire ;
- une forme circulaire ;
- une forme ovale ;
- une forme trapézoïdale.

Selon un autre mode de réalisation de l'invention, l'élément de rigidification en acier porte, sur sa partie supérieure, l'élément de maintien et/ou de guidage et, sur sa partie inférieure, au moins un élément de suppression ou de réduction d'une déformation, réalisé en aluminium.

Dans une variante, ladite partie inférieure dudit élément de rigidification peut porter deux éléments de suppression ou de réduction d'une déformation, formant chacun un barreau réalisé en aluminium.

Une telle mise en oeuvre permet de fournir un maillon qui soit relativement peu coûteux du fait que le ou les éléments de suppression ou de réduction d'une déformation sont réduits et de forme simple.

Dans différents modes de réalisation, l'élément de rigidification peut par exemple présenter une section ouverte, avec :
- une surface de fond venant au contact dudit au moins un élément de suppression ou de réduction d'une déformation ;
- une première surface latérale, perpendiculaire à ladite surface de fond, dont la partie supérieure vient en contact avec une première surface correspondante dudit élément de maintien et/ou de guidage ;
- une deuxième surface latérale, perpendiculaire à ladite surface de fond ;
- une surface supérieure repliée à partir de ladite deuxième surface latérale et s'étendant parallèlement à ladite surface de fond, et venant en contact avec une seconde surface correspondante dudit élément de maintien et/ou de guidage.

L'invention concerne également un maillon en tant que tel d'un robot cartésien selon l'un des modes de réalisation précités, comprenant au moins deux éléments réalisés dans deux matériaux différents et solidarisés l'un à l'autre :
- un élément de rigidification, réalisé à partir d'une tôle d'acier pliée ; et
- un élément de maintien et/ou de guidage, réalisé à partir d'un profilé en aluminium extrudé.

Un tel maillon selon l'invention comprend également un élément de suppression ou de réduction d'une déformation dudit maillon en cas de variation de la température, réalisé dans un premier desdits matériaux et s'étendant parallèlement auxdits éléments de rigidification et de maintien et/ou de guidage, et est fixé à l'élément parmi ceux-ci réalisé dans le second desdits matériaux, de façon que ce dernier, ou au moins une surface de ce dernier, soit placé entre deux éléments réalisés dans le premier matériau, une ou plusieurs portions de l'un desdits éléments subissant une dilatation ou une contraction par rapport à au moins l'un des autres éléments en contact lorsque la température varie.

### Présentation des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig 1] est une vue schématique en coupe illustrant un maillon pour robot cartésien multiaxes selon un premier mode de réalisation ;
[Fig 2] est une vue schématique en perspective illustrant un maillon pour robot cartésien multiaxes selon le mode de réalisation de la figure 1 ;
[Fig 3] est une vue schématique en perspective illustrant un maillon pour robot cartésien multiaxes selon le mode de réalisation de la figure 1 ;
[Fig 4] est une vue schématique en coupe illustrant un maillon pour robot cartésien multiaxes selon un deuxième mode de réalisation ;
[Fig 5] est une vue schématique en perspective illustrant un maillon pour robot cartésien multiaxes selon le mode de réalisation de la figure 4 ;
[Fig 6] est une vue schématique en perspective illustrant un maillon pour robot cartésien multiaxes selon le mode de réalisation de la figure 4, et
[Fig 7] est un graphique présentant une comparaison de la dilatation du maillon en fonction de la température entre l'art antérieur et deux modes de réalisation l'invention.

### Description détaillée de modes de réalisation de l'invention

Le principe général de l'invention repose donc sur la mise en oeuvre d'un ou plusieurs maillons bi-matière dans un robot cartésien, combinant une partie en aluminium assurant notamment les fonctions techniques de guidage et/ou de maintien d'un ou plusieurs éléments mobiles par rapport à ce maillon, et une partie en acier assurant notamment la rigidité, et une troisième partie constituée de l'un de ces deux matériaux, assurant la suppression ou la limitation d'un effet bilame lorsque la température varie.

En d'autres termes, le maillon est composé de deux matériaux dont l'un des deux matériaux est placé « en sandwich » entre deux couches de l'autre matériau, ces trois couches étant solidarisés deux à deux en liaison encastrement de sorte qu'aucun degré de liberté ne subsiste entre ces couches de matériau. En effet, par création d'une symétrie axisymétrique des couches de matériaux, on supprime la déflection de l'ensemble du maillon. De cette manière, on dispose d'un maillon ayant peu voire pas d'inconvénients relatifs à l'effet bilame, tout en assurant un gain économique et technique.

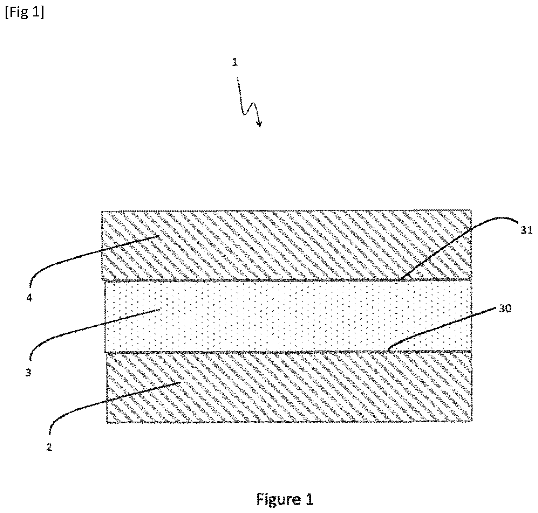

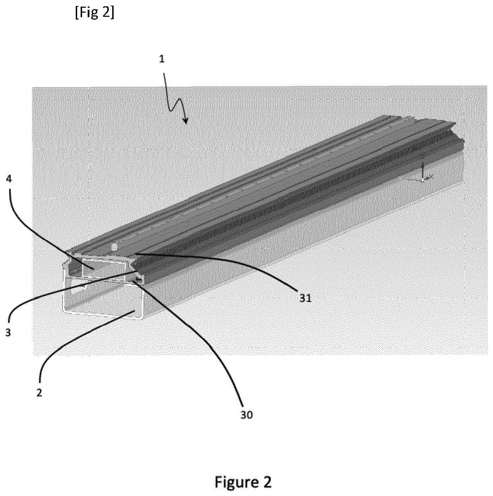

On présente maintenant, en relation avec les figures 1 à 6, différents modes de réalisation de maillons pour un tel robot cartésien.

Il est à noter qu'un tel robot cartésien multiaxes peut comprendre un ou plusieurs maillons selon l'un ou l'autre des modes de réalisation de l'invention. Un tel robot cartésien multiaxes pourrait également comprendre plusieurs maillons fait selon plusieurs modes de réalisation différents de l'invention.

Comme illustré sur ces différentes figures, le maillon 1, 1' est constitué d'au moins deux éléments réalisés dans deux matériaux différents et solidarisés l'un à l'autre :
- un élément de rigidification 2, 2' réalisé à partir d'une tôle d'acier pliée ; et
- un élément de maintien et/ou de guidage 3, 3' réalisé à partir d'un profilé en aluminium extrudé.

Ces deux éléments sont solidarisés l'un à l'autre en liaison encastrement, de sorte qu'ils ne présentent pas de degré de liberté l'un par rapport à l'autre.

En plus de ces deux éléments, le maillon comprend donc un élément de suppression ou de réduction d'une déformation 4, 4' du maillon en cas de variation de la température. Selon l'invention, cet élément de suppression ou de réduction d'une déformation 4, 4' est réalisé dans un premier des matériaux et s'étend parallèlement aux éléments de rigidification 2, 2' et de maintien et/ou de guidage 3, 3'.

Cet élément est lui-même fixé à au moins l'un des deux autres éléments de sorte qu'ils ne présentent pas de degré de liberté l'un par rapport à l'autre.

Cet élément de suppression ou de réduction d'une déformation 4, 4' est solidarisé à l'élément parmi ceux-ci réalisé dans le second des matériaux, de façon que ce dernier, ou au moins une surface de ce dernier, soit placé entre deux éléments réalisés dans le premier matériau.

De cette manière, une ou plusieurs portions de l'un desdits éléments subit une contraction ou une dilatation par rapport à au moins l'un des autres éléments en contact, lorsque la température varie.

On présente maintenant, en relation avec les figures 1 à 3, un premier mode de réalisation de l'invention.

Le maillon 1 présente, dans ce mode de réalisation, un élément de rigidification 2 en acier, un élément de maintien et/ou de guidage 3, réalisé à partir d'un profilé en aluminium extrudé, et un élément de suppression ou de réduction d'une déformation 4 réalisé en acier.

L'élément de maintien et/ou de guidage 3 est placé en sandwich entre l'élément de rigidification 2 et l'élément de suppression ou de réduction d'une déformation 4.

Comme illustré sur ces figures, l'élément de maintien et/ou de guidage 3 définit ici un logement intérieur, dans lequel est inséré l'élément de suppression ou de réduction d'une déformation 4, réalisé en acier.

Plus précisément, l'élément de maintien et/ou de guidage 3 présente une portion plane présentant deux faces, à savoir une face inférieure 30 en contact avec l'élément de rigidification 2 et une face supérieure 31 en contact avec l'élément de suppression ou de réduction d'une déformation 4.

Cet élément de suppression ou de réduction d'une déformation 4 présente ici une section de forme sensiblement rectangulaire.

Toutefois, on pourrait prévoir des modes de réalisation dans lesquels l'élément de suppression ou de réduction d'une déformation présente une section de forme appartenant au groupe comprenant :
- une forme circulaire ;
- une forme ovale ;
- une forme trapézoïdale.

On pourrait également prévoir des variantes dans lesquelles l'élément de suppression ou de réduction d'une déformation présenterait une autre forme, en fonction des besoins.

En ce qui concerne l'élément de maintien et/ou de guidage 3, il présente ici une section de forme sensiblement trapézoïdale, les deux surfaces latérales formant des rails qui peuvent, par exemple, servir de rails de guidage lors de l'insertion du maillon pour le montage du robot.

Cet élément de maintien et/ou de guidage est réalisé en aluminium extrudé, ce qui permet de réaliser des formes complexes, et d'assurer diverses fonctions, notamment de guidage de différents éléments.

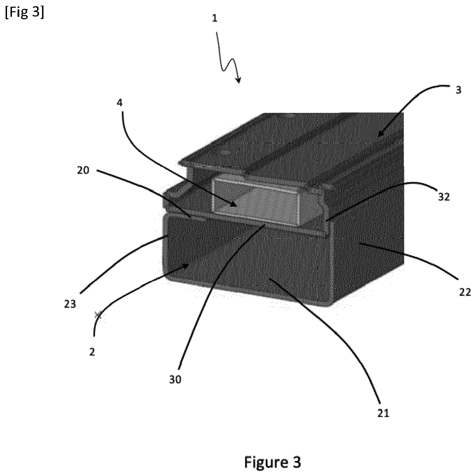

Quant à l'élément de rigidification 2, et comme plus particulièrement illustré en figure 3, il présente dans ce mode de réalisation une section ouverte obtenue par pliage d'une tôle d'acier, avec :
- une partie inférieure 21 formant surface de fond ;
- une première surface latérale 22, perpendiculaire à la surface de fond 21, dont la partie supérieure vient en contact avec une première surface 32 correspondante de l'élément de maintien et/ou de guidage 3 ;
- une deuxième surface latérale 23, perpendiculaire à la surface de fond 21 ;
- une partie supérieure 20 formant surface supérieure, repliée à partir de la deuxième surface latérale 23 et s'étendant parallèlement à la surface de fond 21, et venant en contact avec une seconde surface 30 correspondante de l'élément de maintien et/ou de guidage 3.

Comme visible sur cette figure 3, l'élément de maintien et/ou de guidage 3 est en appui sur l'élément de rigidification 2 à l'endroit de deux zones :
- la première surface 32 de l'élément de maintien et/ou de guidage 3 vient en appui contre la première surface latérale 22 de l'élément de rigidification 2, et
- la seconde surface 30 de l'élément de maintien et/ou de guidage 3 vient en appui contre partie supérieure 20 formant surface supérieure de l'élément de rigidification 2.

Il est à noter que, comme illustré, la surface supérieure 20 ne s'étend que sur une portion de la seconde surface 30, définissant une ouverture entre la surface supérieure 20 et la première surface latérale 22.

De ce fait, et comme visible dans ce mode de réalisation, l'élément de suppression ou de réduction d'une déformation 4 s'étend au-dessus de l'ouverture, et n'est porté que par la seconde surface 30.

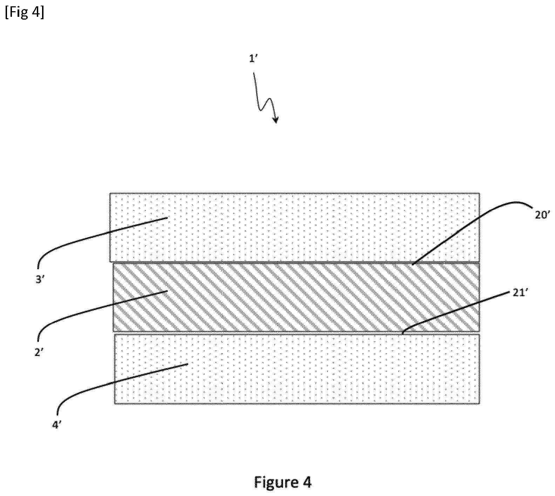

On présente maintenant, en relation avec les figures 4 à 6, un deuxième mode de réalisation de l'invention.

Le maillon 1' présente, dans ce deuxième mode de réalisation, un élément de rigidification 2' en acier, un élément de maintien et/ou de guidage 3' réalisé à partir d'un profilé en aluminium extrudé, et un élément de suppression ou de réduction d'une déformation 4' réalisé en aluminium.

L'élément de rigidification 2' en acier est, dans ce mode de réalisation, pris en sandwich entre l'élément de maintien et/ou de guidage 3' et l'élément de suppression ou de réduction d'une déformation 4' qui sont en aluminium.

Dans ce mode de réalisation, l'élément de rigidification 2' porte donc, sur sa partie supérieure 20', l'élément de maintien et/ou de guidage 3' et, sur sa partie inférieure 21', au moins un élément de suppression ou de réduction d'une déformation 4'.

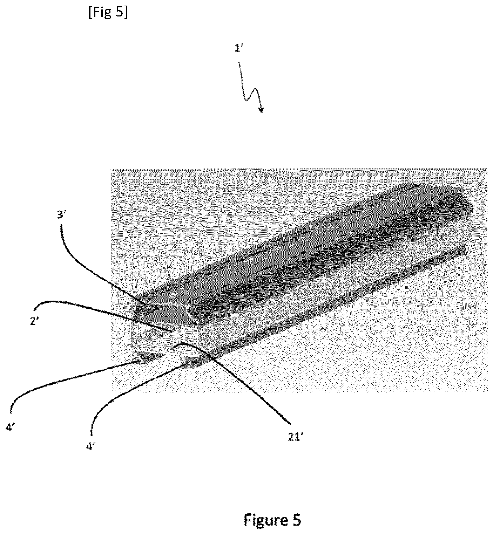

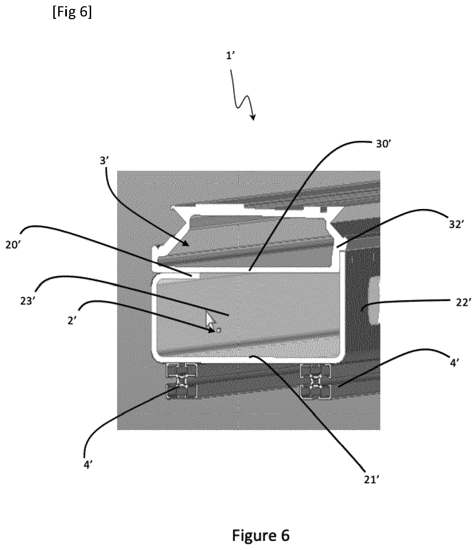

Plus particulièrement ici, et comme illustré notamment en figures 5 et 6, la partie inférieure 21' de l'élément de rigidification 2' porte deux éléments de suppression ou de réduction d'une déformation 4', formant chacun un barreau réalisé en aluminium, placés en parallèle (selon des variantes, un seul élément en aluminium, ou plus de deux, sont bien sûr envisageables).

Ces barreaux en aluminium sont ici placés respectivement en regard des bords latéraux de l'élément de maintien et/ou de guidage 3'.

Chacun de ces éléments de suppression ou de réduction d'une déformation 4' présente ici une section de forme sensiblement carrée. Toutefois, on pourrait prévoir des modes de réalisation dans lesquels le ou les éléments de suppression ou de réduction d'une déformation présentent une section de forme appartenant au groupe comprenant :
- une forme rectangulaire ;
- une forme circulaire ;
- une forme ovale ;
- une forme trapézoïdale.

On pourrait également prévoir des variantes dans lesquelles le ou les éléments de suppression ou de réduction d'une déformation présenteraient une autre forme polygonale, ou une forme quelconque.

L'élément de maintien et/ou de guidage 3' peut être similaire à celui décrit pour le premier mode de réalisation.

Quant à l'élément de rigidification 2', et comme plus particulièrement illustré en figure 6, il présente dans ce mode de réalisation une section ouverte, avec :
- une partie inférieure 21' formant surface de fond ;
- une première surface latérale 22', perpendiculaire à la surface de fond 21', dont la partie supérieure vient en contact avec une première surface 32' correspondante de l'élément de maintien et/ou de guidage 3' ;
- une deuxième surface latérale 23', perpendiculaire à la surface de fond 21' ;
- une partie supérieure 20' formant surface supérieure, repliée à partir de la deuxième surface latérale 23' et s'étendant parallèlement à la surface de fond 21', et venant en contact avec une seconde surface 30' correspondante de l'élément de maintien et/ou de guidage 3'.

Ainsi, et comme visible sur cette figure 6, l'élément de maintien et/ou de guidage 3' est en appui sur l'élément de rigidification 2' à l'endroit de deux zones :
- la première surface 32' de l'élément de maintien et/ou de guidage 3' vient en appui contre la première surface latérale 22' de l'élément de rigidification 2', et
- la seconde surface 30' de l'élément de maintien et/ou de guidage 3' vient en appui contre partie supérieure 20' formant surface supérieure de l'élément de rigidification 2'.

Il est à noter que, comme illustré, la surface supérieure 20' ne s'étend que sur une portion de la seconde surface 30', définissant une ouverture entre la surface supérieure 20' et la première surface latérale 22'.
Ici, les deux barreaux formant les éléments de suppression ou de réduction d'une déformation 4' s'étendent au-dessous de la partie inférieure 21' formant surface de fond.

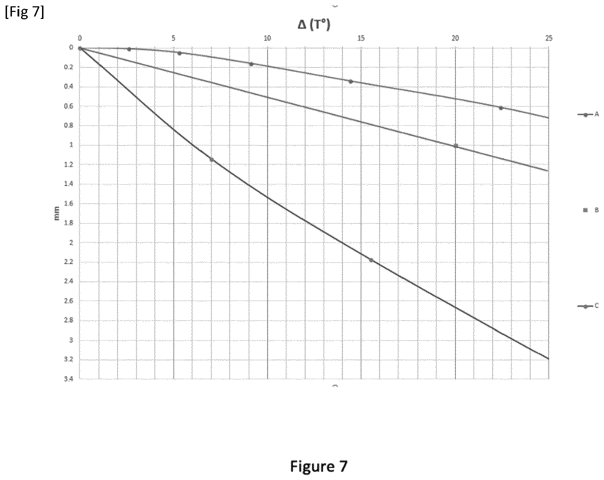

On présente maintenant, en relation avec la figure 7, un graphique montrant une comparaison de la dilatation thermique d'un maillon selon l'art antérieur par rapport à la dilatation thermique de deux modes de réalisations selon l'invention.

Cette étude de la dilatation thermique a été faite sur des maillons comprenant un élément de maintien et/ou de guidage et un élément de rigidification présentant chacun une longueur de 3265mm pour une largeur de 275mm et une hauteur de 210mm

La courbe A présente la dilatation d'un maillon mis en oeuvre selon un mode de réalisation dans lequel l'élément de suppression ou de réduction d'une déformation est réalisé en aluminium et est placé sous l'élément de rigidification en acier. Dans ce mode de réalisation, l'élément de maintien et/ou de guidage et l'élément de rigidification présentent chacun une longueur de 3265mm pour une largeur de 275mm et une hauteur de 210mm. En outre, deux éléments de suppression ou de réduction d'une déformation (placés sous l'élément de rigidification) formant chacun un barreau réalisé en aluminium sont mis en oeuvre, chacun présentant un profil carré de 45mm de côté.

La courbe B présente la dilatation d'un maillon mis en oeuvre selon un mode de réalisation dans lequel l'élément de suppression ou de réduction d'une déformation est réalisé en acier et est inséré dans l'élément de maintien et/ou de guidage.

La courbe C présente la dilatation d'un maillon bi-matière, ne comprenant pas d'élément de suppression ou de réduction d'une déformation.

Dans ce mode de réalisation, et comme déjà indiqué, l'élément de maintien et/ou de guidage et l'élément de rigidification présentent chacun une longueur de 3265mm pour une largeur de 275mm et une hauteur de 210mm.

Comme visible sur la figure 7, la courbe A de dilatation en fonction du différentiel de la température montre qu'un maillon selon le mode de réalisation de l'invention correspondant à cette courbe A présente une dilatation (ici un fléchissement) de 0,2mm pour 10 degrés, de 0,4mm pour 16 degrés, et de 0,6mm pour 22 degrés.

La courbe B de dilatation en fonction du différentiel de la température montre qu'un maillon selon le mode de réalisation de l'invention correspondant à cette courbe B présente une dilatation de 0,5mm pour 10 degrés, de 0,8mm pour 16 degrés, et de 1,25mm pour 25 degrés.

Quant à la courbe C de dilatation en fonction du différentiel de la température, elle montre qu'un maillon bi-matière classique présente une dilatation de 1mm pour 6 degrés, de 2mm pour 14 degrés, et de 3,2mm pour 25 degrés.

On peut donc constater que les différents modes de réalisation de l'invention permettent de limiter efficacement la dilatation thermique d'un maillon. Ainsi, la courbe de la dilatation en fonction du différentiel de la température montre qu'un maillon selon le mode de réalisation de l'invention, selon lequel on a mis en oeuvre une approche bi-matière, mais également au moins un élément de suppression ou de réduction d'une déformation permet d'obtenir ainsi un fléchissement encore plus faible.

Les figures 5 et 6 déjà décrites ci-dessus illustrent les éléments du maillon utilisé pour obtenir la courbe A. Comme déjà décrit, les dimensions principales sont les suivantes :
- élément de maintien et/ou de guidage 3' : longueur de 3265mm pour une largeur de 275mm et une hauteur de 210mm ;
- élément de rigidification 2' : longueur de 3265mm pour une largeur de 275mm et une hauteur de 210mm, avec une première surface latérale 22' présentant une hauteur 210mm une deuxième surface latérale 23' présentant une hauteur de 115mm ;
- deux éléments de suppression ou de réduction d'une déformation 4' (placés sous l'élément de rigidification) : chacun des éléments présente un profil carré de 45mm de côté.

Il est à noter que, comme visible sur la figure 6, l'élément de rigidification ne présente pas de bourrelet de matière au niveau des angles entre la surface de fond et les première et deuxième surfaces latérales.

En complément, au moins un desdits éléments peut également présenter une pluralité de déformations locales permettant une dilatation ou une contraction de l'un desdits éléments par rapport à au moins l'un desdits autres, lorsque la température varie.

Dans ce cas, selon un aspect de l'invention, lesdits éléments peuvent être assemblés selon un axe principal Y, lesdites déformations peuvent s'étendre sensiblement perpendiculairement audit axe principal Y desdits éléments.

Ceci permet d'absorber de manière efficace les éventuelles dilatations du ou desdits éléments lorsque la température du maillon varie.

Lesdites déformations peuvent également comprendre des encoches ou des entailles.

De telles déformations sont relativement simples et donc facile à réaliser, par exemple par des procédés automatisés.

Selon un mode de réalisation, au moins certaines desdites déformations peuvent être formées sur ledit élément de maintien et/ou de guidage.

Notamment, les entailles ou encoches peuvent s'étendre sur au moins deux bords et un angle de l'élément de maintien et/ou de guidage.

Dans ce cas, ledit élément de maintien et/ou de guidage peut présenter deux séries de déformations, distribuées respectivement sur chacun des deux côtés de l'éléments.

Selon un autre mode de réalisation de l'invention, au moins certaines des déformations peuvent être formées sur l'élément de rigidification.

Par exemple, lesdites entailles ou encoches sont distribuées à proximité de lumières destinées au passage de vis de solidarisation des deux éléments.

Selon un aspect d'au moins un mode de réalisation de l'invention, lesdites déformations peuvent être formées au moins sur ladite partie supérieure de la première surface latérale.

Une telle combinaison de déformations et d'un élément supplémentaire de suppression ou de réduction d'une déformation du maillon en fonction des variations de température permet, en cas de besoin, de renforcer la lutte contre l'effet bilame.

## Revendications

1. Robot cartésien comprenant au moins un maillon (1, 1'), ledit maillon étant constitué d'au moins deux éléments réalisés dans deux matériaux différents et solidarisés l'un à l'autre :
- un élément de rigidification (2, 2'), réalisé à partir d'une tôle d'acier pliée ; et
- un élément de maintien et/ou de guidage (3, 3'), réalisé à partir d'un profilé en aluminium extrudé,
l'élément de rigidification (2, 2') et l'élément de maintien et/ou de guidage (3,3') étant solidarisés l'un à l'autre en liaison encastrement à température constante, **caractérisé en ce que** le maillon (1, 1') comprend également un élément de suppression ou de réduction d'une déformation (4, 4') dudit maillon en cas de variation de la température, réalisé dans un premier desdits matériaux et s'étendant parallèlement auxdits éléments de rigidification et de maintien et/ou de guidage, et est solidarisé par encastrement à l'élément parmi ceux-ci réalisé dans le second desdits matériaux, de façon que ce dernier, ou au moins une surface de ce dernier, soit placé entre deux éléments réalisés dans le premier matériau, une ou plusieurs portions de l'un desdits éléments subissant une dilatation ou une contraction par rapport à au moins l'un des autres éléments (2, 2', 3, 3', 4, 4') en contact lorsque la température varie.

2. Robot cartésien selon la revendication 1, **caractérisé en ce que** ledit élément de maintien et/ou de guidage (3) définit un logement intérieur, dans lequel est inséré ledit élément de suppression ou de réduction d'une déformation (4), réalisé en acier.

3. Robot cartésien selon la revendication 2, **caractérisé en ce que** ledit élément de maintien et/ou de guidage (3) présente une portion plane présentant deux faces, une face inférieure (30) en contact avec ledit élément de rigidification (2) et une face supérieure (31) en contact avec ledit élément de suppression ou de réduction d'une déformation (4).

4. Robot cartésien selon l'une des revendications 1 à 3, **caractérisé en ce que** ledit élément de suppression ou de réduction d'une déformation (4) présente une section de forme appartenant au groupe comprenant :
- une forme rectangulaire ;
- une forme circulaire ;
- une forme ovale ;
- une forme trapézoïdale.

5. Robot cartésien selon la revendication 1, **caractérisé en ce que** ledit élément de rigidification (2') porte, sur sa partie supérieure (20'), ledit élément de maintien et/ou de guidage (3') et, sur sa partie inférieure (21'), au moins un élément de suppression ou de réduction d'une déformation (4'), réalisé en aluminium.

6. Robot cartésien selon la revendication 5, **caractérisé en ce que** ladite partie inférieure (21') dudit élément de rigidification (2') porte deux éléments de suppression ou de réduction d'une déformation (4'), formant chacun un barreau réalisé en aluminium.

7. Robot cartésien selon la revendication 1, **caractérisé en ce que** ledit élément de rigidification (2, 2') présente une section ouverte, avec :
- une partie inférieure (21, 21') formant surface de fond ;
- une première surface latérale (22, 22'), perpendiculaire à ladite surface de fond (21, 21'), dont la partie supérieure vient en contact avec une première surface (32, 32') correspondante dudit élément de maintien et/ou de guidage (3, 3') ;
- une deuxième surface latérale (23, 23'), perpendiculaire à ladite surface de fond (21, 21') ;
- une partie supérieure (20, 20') formant surface supérieure, repliée à partir de ladite deuxième surface latérale (23, 23') et s'étendant parallèlement à ladite surface de fond (21, 21'), et venant en contact avec une seconde surface (30, 30') correspondante dudit élément de maintien et/ou de guidage (3, 3').

8. Maillon (1, 1') d'un robot cartésien selon l'une quelconque des revendications 1 à 7,
**caractérisé en ce qu'**il est constitué d'au moins deux éléments réalisés dans deux matériaux différents et solidarisés l'un à l'autre :
- un élément de rigidification (2, 2'), réalisé à partir d'une tôle d'acier pliée ; et
- un élément de maintien et/ou de guidage (3, 3'), réalisé à partir d'un profilé en aluminium extrudé, l'élément de rigidification (2, 2') et l'élément de maintien et/ou de guidage (3,3') étant solidarisés l'un à l'autre en liaison encastrement à température constante,
et **en ce que** le maillon (1, 1') comprend également un élément de suppression ou de réduction d'une déformation (4, 4') dudit maillon en cas de variation de la température, réalisé dans un premier desdits matériaux et s'étendant parallèlement auxdits éléments de rigidification et de maintien et/ou de guidage, et est solidarisé par encastrement à l'élément parmi ceux-ci réalisé dans le second desdits matériaux, de façon que ce dernier, ou au moins une surface de ce dernier, soit placé entre deux éléments réalisés dans le premier matériau, une ou plusieurs portions de l'un desdits éléments subissant une dilatation ou une contraction par rapport à au moins l'un des autres éléments (2, 2', 3, 3', 4, 4') en contact lorsque la température varie.

## Patentansprüche

1. Kartesischer Roboter, umfassend mindestens ein Kettenglied (1, 1'), wobei das Kettenglied aus mindestens zwei Elementen gebildet ist, die aus zwei verschiedenen Materialien gebildet und miteinander fest verbunden sind:
- einem Versteifungselement (2, 2'), das aus einem gebogenen Stahlblech gebildet ist; und
- einem Halte- und/oder Führungselement (3, 3'), das aus einem Aluminium-Strangpressprofil gebildet ist,
wobei das Versteifungselement (2, 2') und das Halte- und/oder Führungselement (3, 3') in einer Steckverbindung bei konstanter Temperatur miteinander fest verbunden sind, **dadurch gekennzeichnet, dass** das Kettenglied (1, 1') gleichermaßen ein Element zum Unterdrücken oder Reduzieren einer Verformung (4, 4') des Kettenglieds bei einer Temperaturschwankung aufweist, das aus einem ersten der Materialien gebildet ist und sich parallel zu dem Versteifungselement und dem Halte- und/oder Führungselement erstreckt, und durch Zusammenstecken mit demjenigen der Elemente, das aus dem zweiten der Materialien gebildet ist, derart fest verbunden ist, dass dieses Letztere oder mindestens eine Fläche von diesem Letzteren zwischen zwei Elementen angeordnet ist, die aus dem ersten Material gebildet sind, wobei ein oder mehrere Abschnitte von einem der Elemente eine Ausdehnung oder eine Schrumpfung gegenüber mindestens einem der anderen Elemente (2, 2', 3, 3', 4, 4') in Kontakt erfahren, wenn sich die Temperatur ändert.

2. Kartesischer Roboter nach Anspruch 1, **dadurch gekennzeichnet, dass** das Halte- und/oder Führungselement (3) eine innere Aufnahme definiert, in die das Element zum Unterdrücken oder Reduzieren einer Verformung (4) eingefügt ist, das aus Stahl gebildet ist.

3. Kartesischer Roboter nach Anspruch 2, **dadurch gekennzeichnet, dass** das Halte- und/oder Führungselement (3) einen ebenen Abschnitt aufweist, der zwei Seiten aufweist, eine Unterseite (30) in Kontakt mit dem Versteifungselement (2) und eine Oberseite (31) in Kontakt mit dem Element zum Unterdrücken oder Reduzieren einer Verformung (4).

4. Kartesischer Roboter nach einem der Ansprüche 1 bis 3, **dadurch gekennzeichnet, dass** das Element zum Unterdrücken oder Reduzieren einer Verformung (4) einen Querschnitt von einer Form aufweist, angehörig der Gruppe umfassend:
- eine rechteckige Form;
- eine Kreisform;
- eine ovale Form;
- eine Trapezform.

5. Kartesischer Roboter nach Anspruch 1, **dadurch gekennzeichnet, dass** das Versteifungselement (2') auf seinem oberen Teil (20') das Halte- und/oder Führungselement (3') und auf seinem unteren Teil (21') mindestens ein Element zum Unterdrücken oder Reduzieren einer Verformung (4') trägt, das aus Aluminium gebildet ist.

6. Kartesischer Roboter nach Anspruch 5, **dadurch gekennzeichnet, dass** der untere Teil (21') des Versteifungselements (2') zwei Elemente zum Unterdrücken oder Reduzieren einer Verformung (4') trägt, die jeweils eine Stange bilden, die aus Aluminium gebildet ist.

7. Kartesischer Roboter nach Anspruch 1, **dadurch gekennzeichnet, dass** das Versteifungselement (2, 2') einen offenen Querschnitt aufweist mit:
- einem unteren Teil (21, 21'), der die Bodenfläche bildet;
- einer ersten Seitenfläche (22, 22'), die senkrecht zu der Bodenfläche (21, 21') ist, deren oberer Teil mit einer entsprechenden ersten Fläche (32, 32') des Halte-und/oder Führungselements (3, 3') in Kontakt kommt;
- einer zweiten Seitenfläche (23, 23'), die senkrecht zu der Bodenfläche (21, 21') ist;
- einem oberen Teil (20, 20'), der die obere Fläche bildet, die ausgehend von der zweiten Seitenfläche (23, 23') umgebogen ist und sich parallel zu der Bodenfläche (21, 21') erstreckt, und mit einer entsprechenden zweiten Fläche (30, 30') des Halte- und/oder Führungselements (3, 3') in Kontakt kommt.

8. Kettenglied (1, 1') eines kartesischen Roboters nach einem der Ansprüche 1 bis 7,
**dadurch gekennzeichnet, dass** es aus mindestens zwei Elementen gebildet ist, die aus zwei verschiedenen Materialien gebildet und miteinander fest verbunden sind:
- einem Versteifungselement (2, 2'), das aus einem umgebogenen Stahlblech gebildet ist; und
- einem Halte- und/oder Führungselement (3, 3'), das ausgehend von einem Aluminium-Strangpressprofil gebildet ist, wobei das Versteifungselement (2, 2') und das Halte- und/oder Führungselement (3, 3') in einer Steckverbindung bei konstanter Temperatur miteinander fest verbunden sind,
und dadurch, dass das Kettenglied (1, 1') gleichermaßen ein Element zum Unterdrücken oder Reduzieren einer Verformung (4, 4') des Kettenglieds bei einer Temperaturschwankung aufweist, das aus einem ersten der Materialien gebildet ist und sich parallel zu dem Versteifungselement und Halte- und/oder Führungselement erstreckt, und durch Zusammenstecken mit demjenigen der Elemente, das aus dem zweiten der Materialien gebildet ist, derart fest verbunden ist, das dieses Letztere oder mindestens eine Fläche von diesem Letzteren zwischen zwei Elementen angeordnet ist, die aus dem ersten Material gebildet sind, wobei ein oder mehrere Abschnitte von einem der Elemente eine Ausdehnung oder eine Schrumpfung gegenüber mindestens einem der anderen Elemente (2, 2', 3, 3', 4, 4') in Kontakt erfahren, wenn sich die Temperatur ändert.

## Claims

1. A cartesian robot comprising at least one link (1, 1'), said link comprising at least two elements made of two different materials and integrally joined to one another:
- a stiffening element (2, 2'), made from a bent sheet of steel; and
- a holding and/or guiding element (3, 3'), made from an extruded aluminium profile,
the stiffening element (2, 2') and the holding and/or guiding element (3,3') being integrally joined to one another as an embedded link at constant temperature, **characterised in that** the link (1, 1') also comprises an element (4, 4') for eliminating or reducing a deformation of said link in the event of variation of the temperature, made of a first of said materials and extending parallel to said stiffening and holding and/or guiding elements, and is integrally joined in a fixed manner to the element among these which is made of the second of said materials, such that the latter, or at least a surface thereof, is placed between two elements made of the first material, one or more portions of one of said elements undergoing an expansion or a contraction relative to at least one of the other elements (2, 2', 3, 3', 4, 4') in contact when the temperature varies.

2. The cartesian robot according to Claim 1, **characterised in that** said holding and/or guiding element (3) defines an inner housing into which is inserted said element (4) for eliminating or reducing a deformation, which is made of steel.

3. The cartesian robot according to Claim 2, **characterised in that** said holding and/or guiding element (3) has a planar portion with two faces, a lower face (30) in contact with said stiffening element (2) and an upper face (31) in contact with said element (4) for eliminating or reducing a deformation.

4. The cartesian robot according to one of claims 1 to 3, **characterised in that** said element (4) for eliminating or reducing a deformation has a section in a shape belonging to the group comprising:
- a rectangular shape;
- a circular shape;
- an oval shape;
- a trapezoidal shape.

5. The cartesian robot according to Claim 1, **characterised in that** said stiffening element (2') bears, on its upper part (20'), said holding and/or guiding element (3') and, on its lower part (21'), at least one element (4') for eliminating or reducing a deformation, which is made of aluminium.

6. The cartesian robot according to Claim 5, **characterised in that** said lower part (21') of said stiffening element (2') bears two elements (4') for eliminating or reducing a deformation, each forming a bar made of aluminium.

7. The cartesian robot according to claim 1, **characterised in that** said stiffening element (2, 2') has an open section, with:
- a lower part (21, 21') forming a bottom surface;
- a first lateral surface (22, 22'), perpendicular to said bottom surface (21, 21'), the upper part of which comes into contact with a corresponding first surface (32, 32') of said holding and/or guiding element (3, 3');
- a second lateral surface (23, 23'), perpendicular to said bottom surface (21, 21');
- an upper part (20, 20') forming an upper surface, folded from said second lateral surface (23, 23') and extending parallel to said bottom surface (21, 21'), and coming into contact with a corresponding second surface (30, 30') of said holding and/or guiding element (3, 3').

8. A link (1, 1') of a cartesian robot according to any one of claims 1 to 7,
**characterised in that** it is comprised of at least two elements which are made of two different materials and integrally joined to one another:
- a stiffening element (2, 2'), made from a bent sheet of steel; and
- a holding and/or guiding element (3, 3'), made from an extruded aluminium profile, the stiffening element (2, 2') and the holding and/or guiding element (3,3') being integrally joined to one another as an embedded link at constant temperature,
and **in that** the link (1, 1') also comprises an element (4, 4') for eliminating or reducing a deformation of said link in the event of variation of the temperature, made of a first of said materials and extending parallel to said stiffening and holding and/or guiding elements, and is integrally joined in a fixed manner to the element among these which is made of the second of said materials, such that the latter, or at least a surface thereof, is placed between two elements made of the first material, one or more portions of one of said elements undergoing an expansion or a contraction relative to at least one of the other elements (2, 2', 3, 3', 4, 4') in contact when the temperature varies.
